(19) Europäisches Patentamt
European Patent Office
Office européen des brevets

(11) EP 3 771 755 A1

(12) # EUROPÄISCHE PATENTANMELDUNG

(43) Veröffentlichungstag:
**03.02.2021 Patentblatt 2021/05**

(51) Int Cl.:
***D01F 2/00*** *(2006.01)* ***D01F 11/02*** *(2006.01)*
***D04H 1/4258*** *(2012.01)*

(21) Anmeldenummer: **19189737.0**

(22) Anmeldetag: **02.08.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Lenzing Aktiengesellschaft
4860 Lenzing (AT)**

(72) Erfinder: **Die Erfindernennung liegt noch nicht vor**

(74) Vertreter: **Nemec, Harald
Schwarz & Partner
Patentanwälte
Wipplingerstrasse 30
1010 Wien (AT)**

(54) **VERFAHREN ZUR HERSTELLUNG VON LYOCELL-STAPELFASERN**

(57) Die Erfindung betrifft ein Verfahren zur Herstellung von Lyocell-Stapelfasern, umfassend die Schritte in folgender Reihenfolge:
a) Extrudieren von Filamenten aus einer Lösung von Cellulose in einem organischen Lösungsmittel
b) Ausfällen der Cellulose zur Bildung von endlosen Cellulosefilamenten
c) Waschen der Cellulosefilamente
d) In-Kontakt-Bringen der Cellulosefilamente mit einem Vernetzungsmittel
e) Reaktion der Cellulosefilamente mit dem Vernetzungsmittel in einer Reaktionskammer
f) Waschen der behandelten Cellulosefilamente
g) Schneiden der gewaschenen Cellulosefilamente zu Stapelfasern
h) Bildung eines Faservlieses aus den Stapelfasern und Abpressen des Faservlieses
i) Avivierung des Faservlieses und Abpressen des Faservlieses.

Fig. 1

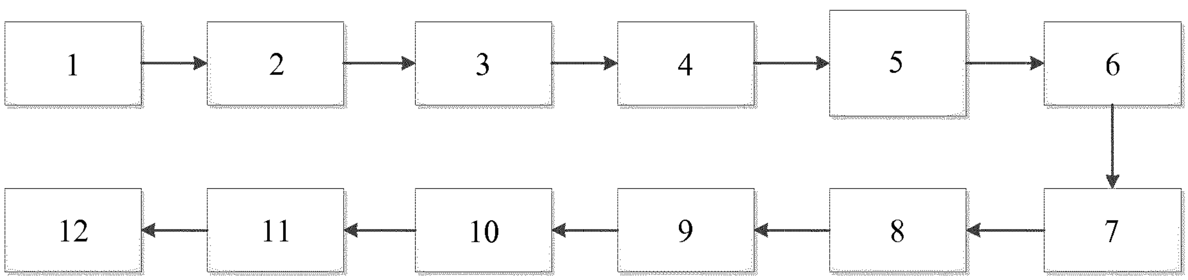


EP 3 771 755 A1

**Beschreibung**

Die vorliegende Erfindung betrifft ein Verfahren zur Herstellung von Lyocell-Stapelfasern sowie eine Lyocell-Stapelfaser, die mit dem erfindungsgemäßen Verfahren erhältlich ist.

In den letzten Jahrzehnten wurden bedingt durch die Umweltproblematik des bekannten Viskoseverfahrens zur Herstellung cellulosischer Fasern intensive Anstrengungen unternommen, alternative und umweltfreundlichere Verfahren zur Verfügung zu stellen. Als eine besonders interessante Möglichkeit hat sich dabei in den letzten Jahren herauskristallisiert, Cellulose ohne Ausbildung eines Derivates in einem organischen Lösungsmittel aufzulösen und aus dieser Lösung Formkörper zu extrudieren. Fasern, welche aus solchen Lösungen ersponnen werden, erhielten von der BISFA (The International Bureau for the Standardization of Man-made Fibres) den Gattungsnamen Lyocell zugeteilt, wobei unter einem organischen Lösungsmittel ein Gemisch aus einer organischen Chemikalie und Wasser verstanden wird.

Weiters sind solche Fasern auch unter dem Begriff "lösungsmittelgesponnene Fasern" bekannt.

Es hat sich herausgestellt, dass sich als organisches Lösungsmittel insbesondere ein Gemisch aus einem tertiären Aminoxid und Wasser hervorragend zur Herstellung von Lyocell-Fasern bzw. anderen Lyocell-Formkörpern eignet. Als Aminoxid wird dabei vorwiegend N-Methylmorpholin-N-oxid (NMMO) verwendet. Andere geeignete Aminoxide sind in der EP 0 553 070 A geoffenbart. Auch ionische Flüssigkeiten sind als organisches Lösungsmittel geeignet. Verfahren zur Herstellung cellulosischer Formkörper aus einer Lösung von Cellulose in einem Gemisch aus NMMO und Wasser sind z. B. in der USA 4,246,221 oder in der WO 93/19230 A geoffenbart. Dabei wird die Celluloselösung aus einer Spinndüse extrudiert, in einem Luftspalt verstreckt und aus der Lösung in einem wässrigen Fällbad ausgefällt. Dieses Verfahren wird im folgenden als "Aminoxidverfahren" oder "Lyocellverfahren" bezeichnet, wobei mit der Abkürzung "NMMO" im folgenden sämtliche tertiäre Aminoxide gemeint sind, die Cellulose lösen können. Nach dem Aminoxidverfahren hergestellte Fasern zeichnen sich durch eine hohe Faserfestigkeit im konditionierten sowie im nassen Zustand, einen hohen Nassmodul und eine hohe Schlingenfestigkeit aus.

Kommerziell hergestellte Lyocellfasern liegen vorwiegend in Form von Stapelfasern vor.

Beim Extrudieren der Spinnlösung durch eine Spinndüse entstehen zunächst endlose Filamente aus Spinnlösung. Diese werden in einem Spinnbad ausgefällt, wodurch nach wie vor endlose Cellulosefilamente gebildet werden. Durch Schneiden dieser Cellulosefilamente auf eine diskrete Länge entstehen Stapelfasern.

Zur Verarbeitung von Lyocell-Fasern nach dem Verspinnen ist umfangreicher Stand der Technik bekannt.

Jedenfalls notwendige Schritte zur Verarbeitung der Lyocell-Fasern sind (ohne dass die folgende Auflistung als zeitliche Reihenfolge des Verfahrens verstanden werden soll):

- Eine mehrfache Wäsche derselben
- Das Aufbringen einer Avivage
- Maßnahmen, um in die Faser eine Kräuselung zu induzieren
- eine oder gegebenenfalls auch mehrere Trocknung(en) der Faser
- sowie eben das Schneiden zu Stapelfasern.

Es ist weiters bekannt, dass Lyocell-Fasern eine gewisse Tendenz zur Fibrillation aufweisen. Gegen diese Eigenschaft wurden bereits zahlreiche Maßnahmen vorgeschlagen, wobei die Behandlung der Lyocell-Faser mit einem Vernetzungsmittel eine kommerziell bedeutsame Vorgangsweise darstellt.

Geeignete Vernetzungsmittel sind beispielsweise in der EP 0 538 977 A, der WO 97/49856 A und der WO 99/19555 A beschrieben. Andere Vernetzungsmittel sind z.B. aus der WO 94/09191 A und der WO 95/28516 A bekannt.

Ein besonders bevorzugtes Vernetzungsmittel ist eine Substanz der Formel (I)

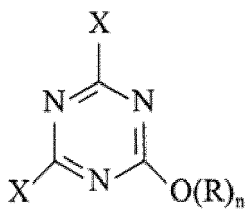

(I)

wobei X Halogen, R=H oder einen ionischen Rest darstellt und n=0 oder 1 ist, bzw. ein Salz dieser Verbindung. Diese Substanz wird im Folgenden auch als "NHDT" bezeichnet.

Aus dem Stand der Technik sind weiters unterschiedliche Konzepte zur Frage, wann die Cellulosefilamente

zu Stapelfasern geschnitten werden und daraus resultierend, in welcher Form (Endlosfilament oder bereits geschnittene Stapelfaser) die Lyocell-Faser die verschiedenen oben angesprochenen Behandlungsstufen durchlaufen.

Beispielsweise ist aus der WO 94/27903 A und der WO 95/24520 A ein Verfahren bekannt, bei welchem die Schritte der Wäsche sowie auch der Induzierung einer Kräuselung an den noch nicht geschnittenen, Cellulosefilamenten durchgeführt werden. Man spricht hier auch von einer "Kabelnachbehandlung". Die Kräuselung wird den Fasern in diesem Verfahren mittels einer sogenannte "Stuffer Box" induziert. Die WO 98/28516 A beschreibt, dass Lyocell-Fasern im Rahmen einer Kabelnachbehandlung mit einem Vernetzungsmittel behandelt werden können.

Aus WO 97/14829 A wiederum ist ein Verfahren bekannt, bei dem die Cellulosefilamente unmittelbar nach dem Verspinnen und dem ersten Waschbad zu Stapelfasern geschnitten werden.

Im Verfahren der WO 97/14829 A wird aus den Stapelfasern ein Vlies gebildet und durch Quetschen bzw. Abpressen des Vlieses in den Fasern eine sogenannte "permanente Kräuselung" erzielt. Die weiteren Verarbeitungsschritte bis zum erstmaligen Trocknen der Fasern werden in Form von Stapelfasern bzw. in Form dieses Vlieses durchlaufen. Dieses Konzept wird im Folgenden als "Vliesnachbehandlung" bezeichnet.

Weitere Details zur Verarbeitung von frisch gesponnenen Fasern ist aus den CN204265902 (U), CN203960407 (U), CN203904520 (U), CN203403200 (U), CN203402582 (U), CN204000264 (U), CN203999953 (U), CN106757906 (A) und CN108360182 (A) bekannt.

Insbesondere im Rahmen der Herstellung von mit einem Vernetzungsmittel behandelten Lyocell-Stapelfasern (im Folgenden: "vernetzte Fasern" genannt) stellen sich mit den bekannten Verfahren zur Verarbeitung der frisch gesponnenen Fasern Probleme dar, sowohl hinsichtlich des Chemikalienverbrauchs als auch hinsichtlich der Effizienz des Verfahrens.

## KURZE BESCHREIBUNG DER ERFINDUNG

Die vorliegende Erfindung stellt sich zur Aufgabe, ein verbessertes Verfahren zur Herstellung von vernetzten Lyocell-Stapelfasern zur Verfügung zu stellen.

Diese Aufgabe wird durch ein Verfahren zur Herstellung von Lyocell-Stapelfasern gelöst, umfassend die Schritte in folgender Reihenfolge:

a) Extrudieren von Filamenten aus einer Lösung von Cellulose in einem organischen Lösungsmittel
b) Ausfällen der Cellulose zur Bildung von endlosen Cellulosefilamenten
c) Waschen der Cellulosefilamente
d) In-Kontakt-Bringen der Cellulosefilamente mit einem Vernetzungsmittel
e) Reaktion der Cellulosefilamente mit dem Vernetzungsmittel in einer Reaktionskammer
f) Waschen der behandelten Cellulosefilamente
g) Schneiden der gewaschenen Cellulosefilamente zu Stapelfasern
h) Bildung eines Faservlieses aus den Stapelfasern und Abpressen des Faservlieses
i) Avivierung des Faservlieses und Abpressen des Faservlieses.

Bevorzugte Ausführungsformen sind in den Unteransprüchen angeführt.

## KURZE BESCHREIBUNG DER FIGUREN

Figur 1 zeigt ein Blockschema zur Veranschaulichung des Ablaufs einer bevorzugten Ausführungsform des erfindungsgemäßen Verfahrens.

Figur 2 zeigt eine Aufnahme einer erfindungsgemäßen Lyocell-Stapelfaser unter dem Lichtmikroskop mit polarisiertem Licht.

Figur 3 zeigt eine Gegenüberstellung der Höller-Faktoren von Lyocellfasern des Standes der Technik und erfindungsgemäßen Lyocell-Stapelfasern.

## DETAILLIERTE BESCHREIBUNG DER ERFINDUNG

Es wurde überraschenderweise gefunden, dass sich Elemente der beiden oben erwähnten Konzepte der Kabelnachbehandlung einerseits und der Vliesnachbehandlung andererseits in neuartiger Weise kombinieren lassen, wodurch sich die Fasereigenschaften erheblich verbessern lassen.

Gemäß der vorliegenden Erfindung erfolgt die erste Wäsche der Fasern (zur Entfernung des Lösungsmittels) und das In-Kontakt-Bringen der Fasern mit dem Vernetzungsmittel, sowie die Reaktion mit dem Vernetzungsmittel noch

in Form von (endlosen) Cellulosefilamenten, also in Kabelform. Erst nach erneuter Wäsche (im Folgenden auch "Vernetzerwäsche" genannt) werden die Cellulosefilamente zu Stapelfasern geschnitten, in Form eines Vlieses gebracht, abgepresst und mit einer Avivage versehen.

Es wurde gefunden, dass im Vergleich zur sogenannten "Vliesnachbehandlung" die Durchführung der Schritte c) bis f), insbesondere Schritt e), die Behandlung mit einem Vernetzungsmittel, an Fasern in Kabelform zu signifikanten Einsparungen im Bereich der eingesetzten Energie und der eingesetzten Chemikalien führt. Das heißt auch, dass im Vergleich zur "Vliesnachbehandlung" mildere Bedingungen für die Behandlung der Faser eingesetzt werden können.

Zudem weisen die Fasern aber durch die abschließenden Verfahrensabschnitte h) und i) in Form eines Vlieses die geschätzte Eigenschaft des "permanenten Crimps" auf.

Als "permanenter Crimp" wird analog zur WO 97/14829 das Vorhandensein von durchschnittlich mindestens zwei Quetschstellen pro Millimeter Filamentlänge verstanden, wobei diese Quetschstellen auch an der getrockneten Faser erhalten bleiben und bei Betrachtung unter linear polarisiertem Licht als Farbänderungen sichtbar sind. Bevorzugt ist dieser "permanente Crimp" auch noch nach der mechanischen Beanspruchung, die beim Kardieren und Garnspinnen entsteht, feststellbar.

Überraschenderweise weisen mit dem erfindungsgemäßen Verfahren erhältliche vernetzte Fasern bessere Faserdaten auf als Fasern, die mit dem gleichen Vernetzungsmittel nach dem Stand der Technik (und zwar sowohl als Vlies oder als Kabel) behandelt werden.

Eine bevorzugte Ausführungsform des erfindungsgemäßen Verfahrens ist dadurch gekennzeichnet, dass die Filamente bzw. die Stapelfasern erstmals nach dem Schritt i) getrocknet werden.

Die Reaktion der Cellulosefilamente mit dem Vernetzungsmittel erfolgt üblicherweise bei erhöhter Temperatur.

Insbesondere kann die Reaktion im Schritt e) unter Energiezufuhr durchgeführt werden.

Bevorzugt wird weiters die Reaktion im Schritt e) in Anwesenheit von Dampf durchgeführt. Selbstverständlich bieten sich auch andere Möglichkeiten, z.B. die Behandlung mit elektromagnetischen Strahlen, insbesondere in einer Mikrowelle, an.

In einer bevorzugten Ausführungsform wird der Schritt e) des erfindungsgemäßen Verfahrens in einer Dampfkammer durchgeführt. Zum Beispiel kann für diesen Schritt eine J-Box eingesetzt werden.

Die Dauer des Schritts e) kann 3 bis 30 Minuten, bevorzugt 10 Minuten bis 25 Minuten, besonders bevorzugt 15 bis 20 Minuten betragen.

Das Vernetzungsmittel kann in einer Menge eingesetzt wird, sodass sich ein Gehalt G an Vernetzungsmittel in mol pro 1 kg Cellulose atro ergibt, welcher folgender Formel genügt: G x R = 0,10 - 0,45, bevorzugt 0,10 - 0,35, besonders bevorzugt 0,20 - 0,35, wobei R die Anzahl an reaktiven Gruppen im Vernetzungsmittel bedeutet. R ist mindestens 2; für das Vernetzungsmittel NHDT mit der Formel (I) ist R = 2. Im Falle anderer Vernetzungsmittel kann R > 2 sein. Beispielsweise gilt für das als Vernetzungsmittel verwendbare Natriumsalz der p-[(4,6-dichlor-1,3,5-triazin-2 yl)amino]benzensulfonsäure ("SDTB"): R=3.

Unter dem Begriff "Reaktive Gruppen" versteht der Fachmann für die Zwecke dieser Erfindung Gruppen, die in der Lage sind, kovalente Bindungen mit OH-Gruppen der Cellulose einzugehen.

Die zum Erreichen des gewünschten Gehalts an Vernetzungsmittel in der Cellulose notwendige Einsatzmenge kann vom Fachmann im Rahmen von Vorversuchen ermittelt werden. Üblicherweise kann davon ausgegangen werden, dass in einer Größenordnung von 30 Gew.% - 70 Gew.%, insbesondere 40 Gew.% bis 60 Gew.% des ursprünglich eingesetzten Vernetzungsmittels in der Faser aufgefunden werden können.

Die Menge an in der Faser erhaltenem Vernetzungsmittel kann anhand der Analyse einer für das Vernetzungsmittel typischen Signatur, z.B. im Fall von stickstoffhältigen Vernetzungsmitteln anhand einer quantitativen Stickstoffanalyse der Faser, festgestellt werden.

Als Vernetzungsmittel wird im erfindungsgemäßen Verfahren in einer bevorzugten Ausführungsform eine Verbindung der Formel (I)

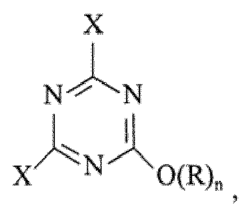

(I)

eingesetzt, wobei X Halogen, R=H oder einen ionischen Rest darstellt und n=0 oder 1 ist, bzw. ein Salz dieser Verbindung, bevorzugt das Natriumsalz des 2,4-Dichlor-6-hydroxy-1.3.5-triazins. Im Folgenden wird diese Verbindung mit dem Kürzel "NHDT" abgekürzt.

Diese Verbindung hat zwei reaktive Gruppen (zwei Halogen-Reste).

Bevorzugt wird das Vernetzungsmittel der Verbindung der Formel (I) in einer Menge von 30-80 g, bevorzugt 45-60 g auf 1 kg Cellulose atro eingesetzt.

Die Aufgabe der vorliegenden Erfindung wird auch durch eine Lyocell-Stapelfaser gelöst, die durch das erfindungsgemäße Verfahren unter Verwendung des Vernetzungsmittels NHDT erhältlich ist und weiters durch die Kombination folgender Eigenschaften gekennzeichnet ist:

- Die Faser weist einen Titer von 1,2 dtex bis 1,5 dtex, bevorzugt 1,25 dtex bis 1,45 dtex, auf
- Die Faser weist eine permanente Kräuselung auf
- Die Faser weist eine Faserfestigkeit in konditioniertem Zustand von zumindest 36 cN/tex, bevorzugt 38 cN/tex bis 42 cN/tex auf
- Die Faser weist einen Höller-Faktor F1 $\geq$ 2,1, bevorzugt $\geq$ 2,4, besonders bevorzugt von 2,5 bis 3,2 auf
- Die Faser weist einen Höller-Faktor F2 $\geq$ 3,0, bevorzugt $\geq$ 3,5, besonders bevorzugt von 4,0 bis 5,5 auf.

Im Normalfall liegt bei kommerziell hergestellten Fasern eine Vielzahl von Fasern vor. Unter "Titer einer Faser" versteht der Fachmann hier den Mittelwert aus mehreren Messungen an mehreren Fasern, bevorzugt aus 20 Messungen.

Die erfindungsgemäße Faser unterscheidet sich zunächst von am Markt erhältlichen vernetzten Lyocellfasern, welche durch eine herkömmliche Kabelnachbehandlung hergestellt werden, durch die oben beschriebene Eigenschaft der permanenten Kräuselung.

Gegenüber von mit NHDT vernetzten Lyocellfasern, welche mit einer Vliesnachbehandlung hergestellt wurden, unterscheidet sich die erfindungsgemäße Faser insbesondere durch ihre erhöhte Faserfestigkeit in konditioniertem Zustand.

Im Jahre 1984 führten Höller und Puchegger (Melliand Textilberichte 1984, 65, 573-574) ein "neues Verfahren zur Charakterisierung von Celluloseregeneratfasern" ein.

Die Autoren erstellten ein Diagramm, das die Fasereigenschaften auf der Grundlage von zwei berechneten Faktoren widerspiegelt, die auf zwei Achsen aufgetragen werden und das sogenannte "Höller-Diagramm" erzeugen, wobei sich verschiedene Fasertypen in unterschiedlichen Bereichen abgrenzen lassen.

Die mechanischen Eigenschaften von Textilfasern, die diese beiden Faktoren generieren, sind in der Fachwelt bekannt und können nach BISFA "Prüfverfahren Viskose, Modal, Lyocell und Acetat Stapelfasern und Seile" Ausgabe 2004, Kapitel 7, gefunden und getestet werden.

Die beiden Höller-Faktoren werden wie nachfolgend beschrieben berechnet:

$$F1= - 1,109 + 0,03992*\text{Festigkeit (kond)} - 0,06502*\text{Dehnung (kond)} + 0.04634*\text{Festigkeit (nass)} - 0,04048*\text{Dehnung (nass)} + 0,08936*\text{BISFA-Modul} + 0,02748*\text{Schlingenfestigkeit} + 0,02559*\text{Knotenfestigkeit}$$

$$F2= -7,070 + 0,02771*\text{Festigkeit (kond)} + 0,04335*\text{Dehnung (kond)} + 0,02541*\text{Festigkeit (nass)} + 0,03885*\text{Dehnung (nass)} - 0,01542*\text{BISFA-Modul} + 0,2891*\text{Schlingenfestigkeit} + 0.1640*\text{Knotenfestigkeit}$$

Laut Lenzinger Berichte 2013, 91, 07-12, können im Höller-Diagramm Fasern aus verschiedenen Produktionsprozessen, z.B. direkte Auflösung vs. Derivatisierung, klar voneinander unterschieden werden. Auch bei den Fasertypen mit direkter Auflösung fallen Fasern, die aus verschiedenen direkten Lösungsmitteln hergestellt werden, in unterschiedliche Bereiche - z.B. Fasern, die aus Lösungen in ionischen Flüssigkeiten gesponnen werden oder andererseits NMMO.

Handelsübliche Lyocellfasern (nicht vernetzt) weisen Höller-F1-Werte zwischen 2 und 3 und Höller-F2-Werte zwischen 2 und 8 auf (WO 2015/101543 und Lenzinger Berichte 2013, 91, 07-12). Die aus direkten Lösungen in ionischen Flüssigkeiten gewonnenen Fasern decken einen Bereich von Höller-F1-Werten zwischen 3 und 5,5 und Höller-F2-Werten zwischen 7 und 10,5 ab (Lenzinger Berichte 2013, 91, 07-12). WO 2015/101543 veröffentlicht einen neuen Lyocellfasertyp mit Höller-F2-Werten in einem unteren Bereich zwischen 1 und 6 und Höller-Fl-Werten zwischen -0,6 und einem rechten oberen Rand, der durch F2-4,5*F1 $\geq$3, insbesondere $\geq$1 definiert ist.

Daher beschreibt WO 2015/101543 eine (unvernetzte) Lyocellfaser mit einer bestimmten Position im Höller-Diagramm. Die beanspruchten Lyocellfasern wurden aus Mischungen von hochwertigen Holzzellstoffen mit hohem $\alpha$-Gehalt und niedrigem Nichtzellulosegehalt, wie Hemicellulosen, hergestellt, um eine spezifische Molekulargewichtsverteilung und optimierte Spinnparameter zu erreichen. Der Luftspalteinfluss wird reduziert, das Spinnen erfolgt bei hohen Temperaturen und unter Einsatz von niedrigeren Verzug. Diese Faser zeichnet sich durch eine erhöhte Nass-Scheuerfestigkeit aus, obwohl sie nicht vernetzt ist.

Weitere Formen von unvernetzten Lyocell-Fasern in anderen Bereichen des Höller-Diagramms sind in der PCT/EP2019/055441 (unveröffentlicht) offenbart.

Die erfindungsgemäßen Fasern weisen Höller-Faktoren von $F1 \geq 2{,}1$ und $F2 \geq 3{,}0$ auf. Eine vernetzte Lyocell-Faser mit so hohen Höller-Faktoren F1 und F2 wurde bislang nicht beschrieben.

In der folgenden Tabelle 1 sind für einige Typen von Lyocell-Fasern beispielhafte Werte für die zur Ermittlung der Höller-Faktoren relevanten textilen Parameter zusammengestellt:

Tabelle 1

| Faser-type | Titer [dtex] | FFk. [cN/tex] | FDk. [%] | FFn. [cN/tex] | FDn. [%] | BISFA-Modul [cN/tex/5%] | SFk. [cN/tex] | SDk. [%] | KFk. [cN/tex] | HF F1 | HF F2 |
|---|---|---|---|---|---|---|---|---|---|---|---|
| **Faser 1** | 1,47 | 35,9 | 10,2 | 23,9 | 10,4 | 10,7 | 9,3 | 1,5 | 18,7 | 2,0 | 0,9 |
| **Faser 2** | 1,34 | 36,6 | 9,9 | 24,6 | 10,5 | 10,6 | 10,2 | 1,4 | 19,3 | 2,1 | 1,4 |
| **Faser 3** | 1,36 | 32,9 | 9,3 | 25,8 | 11,9 | 9,7 | 12,0 | 2,4 | 21,4 | 2,1 | 2,2 |
| **Faser 4** | 1,36 | 37,5 | 12,3 | 30,9 | 16,3 | 9,6 | 16,3 | 3,7 | 28,1 | 2,4 | 5,1 |
| **Faser 5** | 1,38 | 39,6 | 10,1 | 27,4 | 10,9 | 11,4 | 15,5 | 2,8 | 26,2 | 2,8 | 4,2 |

Legende:
FFk = Faserfestigkeit konditioniert
FDk = Faserdehnung konditioniert
FFn. = Faserfestigkeit nass
FDn. = Faserdehnung nass
BISFA-Modul = Nassmodul bei 5% Dehnung
SFk. = Schlingenfestigkeit konditioniert
SDk. = Schlingendehnung konditioniert
KFk.= Knotenfestigkeit konditioniert
HF F1 = Höller Faktor F1
HF F2 = Höller Faktor F2

Faser 1 ist eine kommerziell erhältliche vernetzte Faser, hergestellt nach der herkömmlichen Kabelnachbehandlung mit mechanischem Crimp, welche mit einem vom für die Herstellung der erfindungsgemäßen Faser verwendeten Vernetzer unterschiedlichen Vernetzer behandelt wurde.

Faser 2 ist eine kommerziell erhältliche vernetzte Lyocell-Faser, welche mit dem gleichen Vernetzer behandelt wurde wie die erfindungsgemäße Faser. Faser 2 wurde aber ebenfalls nach der Kabelnachbehandlung hergestellt.

Faser 3 ist eine nach der Vliesnachbehandlung hergestellte und mit dem gleichen Vernetzer wie die erfindungsgemäße Faser behandelte Faser, welche kommerziell erhältlich ist.

Als weiterer Vergleich wurde Faser 4, eine unvernetzte Lyocell-Standardfaser, angeführt. Aus diesem Vergleich lässt sich ableiten, welchen Einfluss der Vernetzungsprozess auf die textilen Parameter hat.

Die obige Tabelle 1 zeigt die Höller-Faktoren der erfindungsgemäßen Faser (Faser 5). Die Höller-Faktoren der erfindungsgemäßen Faser sind sehr unterschiedlich zu den Höller-Faktoren von anderen vernetzten Lyocell-Fasern, aber auch von einer unvernetzten Lyocell-Faser (Faser 4).

Grafisch sind die Unterschiede in den Höller-Faktoren noch deutlicher aus Figur 3 ersichtlich, in welcher Ergebnisse zahlreicher Messungen an Fasern der Typen Faser 1 bis Faser 5 dargestellt sind.

Die erfindungsgemäßen Fasern weisen somit eine sehr hohe Festigkeit auf.

Vor allem bei der herkömmlichen Vliesnachbehandlung baut die Faserfestigkeit durch Schädigung während der Vernetzungsreaktion stark ab, wie anhand von Faser 3 gezeigt wurde. Die Schädigung tritt aufgrund von hydrolytischer Spaltung der Celluloseketten auf. Die dadurch entstehenden kürzeren Ketten reduzieren die Faserfestigkeit.

Nach der Kabelnachbehandlung hergestellte Fasern haben umgekehrt neben dem fehlenden permanenten Crimp unabhängig von der Vernetzerchemie den Nachteil, dass die Faser sehr spröde wird. Dies ist anhand der geringeren Schlingen- und Knotenfestigkeiten der Fasern 1 und 2 ersichtlich. Hier liefert die erfindungsgemäße Faser (Faser 5) ausgezeichnete Werte, das heißt, das Problem der Versprödung tritt nicht auf, was sich in einem deutlich höheren Höller Faktor F2 auswirkt.

Der Höller Faktor F1 erhöht sich vor allem auch gegenüber der Standardfaser (Faser 4), da die Gewichtung der Faserdehnung im trockenen und nassen bei diesem negativ ist. Vor allem die Nassdehnung nimmt durch die Vernetzung der Faser stark ab.

Zusätzlich ist auch die Schlingendehnung von Bedeutung. Eine niedrige Schlingendehnung ist ebenso gleichbedeutend mit einer spröden Faser. Spröde Fasern führen zu schlechterer Verarbeitbarkeit, u.a. durch Staubbildung im Garnspinnprozess.

Die erfindungsgemäße Faser ist auch hinsichlich ihrer Faserdehnung in konditioniertem Zustand einer kommerziell erhältlichen, mit NHDT vernetzten Lyocellfaser überlegen. Bevorzugt beträgt die Faserdehnung in konditioniertem Zustand der erfindungsgemäßen Faser 10% und mehr, besonders bevorzugt 10% bis 11%.

In Folge dieser Eigenschaften weist die erfindungsgemäße Faser bevorzugt ein Arbeitsvermögen von 380 %*cN/tex und mehr auf. Das Arbeitsvermögen, dargestellt in Tabelle 2, ergibt sich aus der Multiplikation von Faserfestigkeit [cN/tex] und Dehnung [%].

Tabelle 2

| Fasertype | Titer [dtex] | FFk. [cN/tex] | FDk. [%] | Arbeitsvermögen [%cN/tex] |
|---|---|---|---|---|
| **Faser 1** | 1,47 | 35,9 | 10,2 | 366 |
| **Faser 2** | 1,34 | 36,6 | 9,9 | 362 |
| **Faser 3** | 1,36 | 32,9 | 9,3 | 306 |
| **Faser 4** | 1,36 | 37,5 | 12,3 | 460 |
| **Faser 5** | 1,38 | 39,6 | 10,1 | 400 |

Im Vergleich mit kommerziell hergestellten, mit NHDT vernetzten Fasern weist die erfindungsgemäße Faser bei gleicher Einsatzmenge an Vernetzungsmittel auch einen erhöhten Stickstoffgehalt auf, d.h. die Effizienz der Vernetzungsreaktion ist höher.

Die erfindungsgemäße Faser ist weiters bevorzugt gekennzeichnet durch eine Nassscheuerfestigkeit (NSF) von 300 Umdrehungen/dtex (U/dtex) oder mehr, bevorzugt 400 U/dtex oder mehr, besonders bevorzugt 450 U/dtex oder mehr. Eine unvernetzte Lyocell-Faser weist eine NSF von etwa 40 bis 80 U/dtex auf. Die NSF ist eine Kennzahl für die Beständigkeit der Faser gegenüber Fibrillation, die beim Waschen des Textils auftritt und nach der in den Beispielen angegebenen Testmethode bestimmt wird. Anhand der guten Nassscheuerfestigkeiten der erfindungsgemäßen Faser wird auch diese für vernetzte Fasern wesentliche Anforderung erfüllt.

Der Gehalt G an Vernetzungsmittel in mol pro 1 kg Cellulose atro in der erfindungsgemäßen Faser genügt

bevorzugt folgender Formel:
G x R = 0,10 - 0,45, bevorzugt 0,10 - 0,35, besonders bevorzugt 0,20 - 0,35, wobei R wie bereits oben definiert die Anzahl an reaktiven Gruppen im Vernetzungsmittel bedeutet.

Insbesondere bevorzugt beträgt der Gehalt des Vernetzungsmittels der Verbindung der Formel (I) 2,0-3,0 Gew.% bezogen auf Cellulose atro.

Die vorliegende Erfindung betrifft auch ein Faserbündel, enthaltend zumindest 20 kg einer erfindungsgemäßen Lyocell-Stapelfaser. Damit stellt die vorliegende Erfindung die erfindungsgemäße Faser in kommerziellen Mengen zur Verfügung.

Solche Mengen an Lyocell-Stapelfaser wären mit einer Laboranlage mit nur einer oder nur wenigen Spinndüsen und insbesondere nur wenigen Spinnlöchern, wie sie zur wissenschaftlichen Forschung verwendet werden, nicht herstellbar.

Umgekehrt bestehen natürlich zwischen einer solchen Laboranlage und einer kommerziellen Herstellung deutliche Unterschiede bei der Frage der Herstellbarkeit von Fasern mit bestimmten textilen Parametern.

Die vorliegende Erfindung betrifft auch einen textilen Artikel, enthaltend eine erfindungsgemäße Lyocell-Stapelfaser.

Bevorzugt liegt der textile Artikel in Form eines Garns vor. Auch zur Herstellung eines Garns ist jedenfalls eine Menge an Fasern, also zumindest einige kg Faser, erforderlich, die mit einer Laboranlage, wie oben beschrieben, nicht herstellbar wäre.

Exemplarisch werden in der folgenden Tabelle 3 die Garndaten zweier Faserballen (Vergleichsballen 1 und 2) einer kommerziell produzierten Faser 3 im Vergleich zu je einem Ballen der erfindungsgemäßen Faser (Faser 5), hergestellt nach den unten angegebenen Beispielen 2 bzw. 5, dargestellt.

Tabelle 3

| | **Dünnstellen [-50%/km]** | **Dickstellen [+50%/km]** | **Nissen [+140% /km]** | **Nissen [+200% /km]** | **Festigkeit [cN/tex]** | **Dehnung [%]** | **Staub [ppm]** |
|---|---|---|---|---|---|---|---|
| **Vergleichsballen 1** | 2 | 18 | 161 | 32 | 21 | 7 | 500 |
| **Vergleichsballen 2** | 5 | 28 | 225 | 34 | 20,2 | 6,6 | 460 |
| **Beispiel 2** | 1 | 15 | 151 | 37 | 26,8 | 8,1 | 254 |
| **Beispiel 5** | 0 | 8 | 106 | 23 | 24,2 | 7,9 | 135 |

Neben den höheren Garnfestigkeiten und Garndehnungen ergibt sich bei den Ballen aus erfindungsgemäßer Faser eine verbesserte Produktqualität anhand der geringeren Anzahl von Dick- und Dünnstellen sowie Nissen. Auch der Staubwert ist aufgrund der beschriebenen reduzierten Sprödigkeit der Faser reduziert. Die Verarbeitbarkeit der Faser an der Garnspinnmaschine verbessert sich dadurch.

DETAILLIERTE BESCHREIBUNG DER FIGUREN

Figur 1 ist ein Blockschema der Verfahrensschritte, wie sie zur Herstellung einer bevorzugten Ausführungsform der erfindungsgemäßen Fasern durchgeführt werden. Die erste Wäsche der Fasern (zur Entfernung des Lösungsmittels) und das In-Kontakt-Bringen der Fasern mit dem Vernetzungsmittel, sowie die Reaktion mit dem Vernetzungsmittel, erfolgt noch in Form von (endlosen) Cellulosefilamenten, also in Kabelform. Erst nach der Vernetzerwäsche werden die Cellulosefilamente zu Stapelfasern geschnitten. Nachfolgend werden die einzelnen Schritte chronologisch angeführt:

1) Herstellung der Spinnmasse
2) Faserspinnen umfassend Extrudieren von Filamenten aus einer Lösung von Cellulose in einem organischen Lösungsmittel und Ausfällen der Cellulose zur Bildung von endlosen Cellulosefilamenten
3) Waschen der Cellulosefilamente mittels Kabelwäsche
4) Imprägnierung durch In-Kontakt-Bringen der Cellulosefilamente mit einem Vernetzungsmittel
5) Reaktion der Cellulosefilamente mit dem Vernetzungsmittel in einer Reaktionskammer
6) Vernetzerwäsche durch Waschen der behandelten Cellulosefilamente
7) Schneiden der gewaschenen Cellulosefilamente zu Stapelfasern
8) Bildung eines Faservlieses aus den Stapelfasern

9) Entwässerung durch Abpressen des Faservlieses
10) Avivierung des Faservlieses und erneutes Abpressen des Faservlieses
11) Trocknung
12) Herstellung eines Faserballens

Figur 2 zeigt eine polarisationsmikroskopische Aufnahme einer bevorzugten Ausführungsform einer erfindungsgemäßen Lyocell-Stapelfaser (Beispiel 1 aus Tabelle 4, unten). Mittels linear polarisiertem Licht werden die unregelmäßigen Quetschstellen sichtbar gemacht, welche auch an der getrockneten Faser während des Garnspinnens erhalten bleiben. Als "permanenter Crimp" wird analog zur WO 97/14829 das Vorhandensein von durchschnittlich mindestens zwei Quetschstellen pro Millimeter Filamentlänge verstanden. Die Fasern in Figur 2 weisen die geschätzte Eigenschaft des "permanenten Crimps" auf, welche durch die abschließenden Verfahrensabschritte h) und i) des erfindungsgemäßen Verfahrens entstehen. Der Mikrocrimp der Lyocell-Stapelfaser aus Figur 2 betägt 107/2cm.

Figur 3 zeigt eine Gegenüberstellung der Höller-Faktoren von Lyocellfasern des Standes der Technik und bevorzugten Ausführungsformen der erfindungsgemäßen Lyocell-Stapelfasern. Das Diagramm ist ein Ergebnis von Messungen an Fasern der Typen Faser 1 bis Faser 5. Hier sei auf Tabelle 1 und die dazugehörige Beschreibung der Fasern 1 bis 5 verwiesen.

BEISPIELE

Beispiele 1-5

Cellulose-Endlosfilamente wurden auf einer semikommerziellen Pilotanlage auf an sich bekannte Weise zu einem Faserkabel gesponnen und mittels Kabelwäsche kontinuierlich NMMO-frei gewaschen. Nach der Kabelwäsche erfolgte eine Abpressung des Faserkabels, um die Verschleppung von Waschwasser in das nachfolgende Imprägnierbad zu minimieren. Das Imprägnierbad enthielt den Vernetzer (NHDT) und wurde kontinuierlich mit Vernetzer aus einem Starkbad aufgestärkt. Nach dem In-Kontakt-Bringen mit dem Vernetzungsmittel wurde in einem weiteren Bad die Natronlauge aufgebracht. Auch das Natronlaugebad wurde kontinuierlich mit Natronlauge aufgestärkt, um eine geeignete Konzentration über längere Zeit konstant zu halten.

Zur Reduktion von Nebenreaktionen wurde dieses Bad auf 10 °C abgekühlt. Nachfolgend wurde das so modifizierte Faserkabel in eine Dampfkammer geführt, welche in Form einer J-Box ausgeführt war.

Die Verweilzeit konnte mittels entsprechender Markierung am Kabel und einer Stoppuhr gemessen werden.

Das Faserkabel wurde aus der J-Box herausgezogen und einer Vernetzerwäsche zugeführt, um überschüssige Chemikalen zu entfernen. Daraufhin wurde das Kabel einem Schneidturm zugeführt, um Stapelfasern zu formen. Die Faserstapeln wurden mit Wasser abgeschwemmt und einer Vliesbildung zugeführt. Nach der Ausformung des Vlieses wurde das Vlies abgepresst und einer Avivage zugeführt. Das avivierte Vlies wurde nochmals abgepresst, von einem Vlieszerleger geöffnet, in einem geeigneten Trockner zu einer fertigen Faser getrocknet und danach einer Ballenpresse zugeführt.

In der folgenden Tabelle 4 sind Versuchsparameter von einigen Versuchen zur Herstellung erfindungsgemäßer Fasern zusammengefasst. Die Versuche zeigen den Einfluß der verschiedenen wesentlichen Produktionsparameter NHDT-Dosierung, Laugebadkonzentration und Verweilzeit.

Tabelle 4

| ***Beispiel*** | ***1*** | ***2*** | ***3*** | ***4*** | ***5*** |
|---|---|---|---|---|---|
| **Produzierte Fasermenge [kg/h]** | 56 | 75 | 64,4 | 61,3 | 61,3 |
| **NHDT Dosierung [kg/h]** | 4,4 | 5,0 | 4,2 | 4,6 | 4,6 |
| **Konzentration Laugebad [g/l]** | 15 | 17 | 14 | 11 | 12,5 |
| **Verweilzeit [min]** | 19 | 12 | 18 | 18 | 18 |
| **NSF [U/dtex]** | 612 | 538 | 435 | 570 | 665 |
| **CV [%]** | 28 | 33 | 35 | 41 | 42 |
| **Stickstoffauflage [%]** | 0,636 | 0,477 | 0,589 | 0,629 | 0,592 |
| **G x R [mol/kg]** | 0,303 | 0,227 | 0,280 | 0,300 | 0,282 |
| ***Textile Parameter*** | | | | | |
| **Fasertiter [dtex]** | 1,40 | 1,38 | 1,41 | 1,32 | 1,32 |

(fortgesetzt)

| Textile Parameter | | | | | |
|---|---|---|---|---|---|
| **Festigkeit [cN/tex]** | 39 | 38,4 | 38,7 | 38,2 | 38,5 |
| **Dehnung [%]** | 10,5 | 10,2 | 10,8 | 10,6 | 9,9 |
| **Mikrocrimp [#/2cm]** | 107 | 89 | 95 | 117 | 102 |

In Beispiel 2 wurde durch Erhöhung der Produktionsgeschwindigkeit die Verweilzeit gesenkt. Es zeigt sich, dass gleichermaßen eine vernetzte Faser produziert werden kann, allerdings wird eine geringere Stickstoffauflage erreicht.

Die erfindungsgemäße Technologie ist prinzipiell auch für verschiedene andere Modifikationen an einem Faserstrang geeignet, wie zum Beispiel für die Aufbringung eines Reaktivfarbstoffes und nachfolgende Vernetzung desselben.

Die erfindungsgemäße Technologie eignet sich aber auch ganz allgemein zum Aufbringen anderer Modifikationsmittel als Vernetzungsmittel, wie z.B. Chitosan (PCT/AT2009/000334).

Abgesehen vom oben beschriebenen Vernetzungsmittel NHDT können auch andere Vernetzungsmittel wie die in den oben dazu genannten Dokumenten beschriebenen Vernetzungsmittel, oder auch andere Reaktivharze, beispielsweise Ein- oder Mehrkomponentensysteme, die durch den Einfluß von Luftfeuchtigkeit, Sauerstoff oder Temperatur aushärten, insbesondere Epoxide, Acrylate, Polyurethane und ähnliche Verbindungen, eingesetzt werden. Insbesondere lassen sich die notwendigen Bedingungen für die Applikation der Chemikalien sehr leicht anpassen. Das Imprägnierbad kann zum Beispiel auch geheizt werden. Ebenso kann die Reaktionskammer auf die jeweils notwendigen Temperaturen oder Verweilzeiten ausgelegt werden.

Testmethoden

*Bestimmung der Nassscheuerfestigkeit (NSF)*

Die Nassscheuerfestigkeit (NSF) ist eine Kennzahl für die Beständigkeit der Faser gegenüber Fibrillation. Diese Kennzahl wurde nach der Nassabriebmethode, welche in "Zur Fasernassscheuerung von Viskosefasern" Faserforschung and Textiltechnik 19 (1968), Ausgabe 10, Seite 447-452, beschrieben ist, ermittelt. Dabei rotieren die Fasern auf einer feuchten Rolle und werden abgerieben. Die Anzahl der Umdrehungen bis zum Durchreißen der Faser wird bestimmt.

Die Nassscheuerfestigkeit wurde mittels des Geräts "Delta 100" von Lenzing Instruments bestimmt. Der Stahlschaft wurde während der Messung kontinuierlich in Längsrichtung bewegt, um Kerben im Filamentschlauch zu vermeiden.

Die Bezugsquelle für den Filamentschlauch war: VOM BAUR GmbH & KG. Markstraße 34, D-42369 Wuppertal.

Zwanzig Fasern mit einer Länge von 38 mm wurden auf einer Metallrolle mit einer Dicke von 1 cm plaziert und mit dem Vorspanngewicht belastet. Die Rolle war mit einem Schlauch aus Viscose Filament-Garn bedeckt und wurde kontinuierlich befeuchtet. Die Rolle wurde bei der Messung mit einer Geschwindigkeit von 500 Umdrehungen pro Minute gedreht und gleichzeitig wurde sie diagonal zur Faserachse rückwärts und vorwärts gedreht, wodurch eine Pendelbewegung von etwa 1 cm entstand.

Die Anzahl der Umdrehungen bis die Fasern durchreißen und das Vorspanngewicht einen Kontakt berührt, wurden bestimmt. Das Ergebnis der Auswertung wurde bereits bezogen auf den jeweiligen Fasertiter in [U/dtex] ausgegeben.

Testparameter:

Wasserflussrate: 8,2 mL/min
Rotationsgeschwindigkeit: 500 U/min
Abriebwinkel: 40°
Vorspanngewicht: 50 mg

200 U/dtex oder mehr, besonders 400 U/dtex oder mehr stellen eine kaum fibrillierende (low fibrillating, LF) Faser bzw. eine Faser die widerstandsfähig gegen Fibrillation in konventionellen Nassprozessen ist, dar.

*Stickstoffanalysator zur Bestimmung der Stickstoffauflage durch Verglühen der Probe*

Die Bestimmung der Stickstoffauflage auf der Faser erfolgt mittels Messung des N-Gehaltes (z.B. mittels LECO

FP 328 Stickstoffanalyser) durch Verglühen der Probe. Darüber kann die Menge des Vernetzers bestimmt werden.

*Auszählung von Mikrocrimp*

Aus einer Faserprobe, die aus einem Faserballen entnommen wurde, wurden an verschiedenen Stellen Fasern entnommen, um eine Mischprobe zu erhalten. Auf einen Objektträger wurde ein Tropfen Glycerin gegeben, in welchem einige Einzelfasern aus der Mischprobe möglichst gerade platziert wurden. Es wurde ein Deckglas auf den einige Einzelfasern enthaltenden Tropfen Glycerin gelegt. Der Objekträger wurde unter einem Polarisationsmikroskop platziert. Der Mikrocrimp wurde im Bereich des Deckglases (2x2 cm) gezählt.

*Staubprüfung (Garn)*

Staubbildung im Garnspinnprozess wird beispielsweise durch spröde Fasern und deren schlechtere Verarbeitbarkeit ausgelöst. Die Messung der Staubbildung erfolgte auf einer Pilotanlage. Die zu testenden Fasern wurden umgespult. Es wurden etwa 500 g Garn bei einer Spulengeschwindigkeit von 1000 m/min umgespult. Die umgespulte Garnmenge wurde auf 1 mg genau bestimmt. Der dabei entstehende Faserstaub wurde gesammelt und mittels Analysenwaage auf 0,1 mg genau gewogen. Die Faserstaubmenge beschreibt den mechanischen Schädigungsgrad der Faser während der Verarbeitungsprozesse in der Garnspinnerei. Je höher die Menge an Staub [ppm], umso empfindlicher ist die Faser in der Verarbeitung.

Zur Berechnung wurde folgende Formel herangezogen:

$$\text{Staub in ppm} = (\text{gewogenener Faserstaub [g]} * 1.000.000) / \text{umgespulte Garnmenge [g]}$$

Beispielsweise: 97,83 ppm = (0,0520 g * 1.000.000) / 531,512 g

*Dünn-/Dickstellen und Nissen*

Garne können verschiedene Unregelmäßigkeiten an der Oberfläche aufweisen, wie beispielsweise Dünnstellen, Dickstellen und Nissen. Die Prüfung auf Dünn- und Dickstellen, sowie Nissen wurde anhand folgender Schritte durchgeführt. Das zu testende Garn wurde mittels eines USTER® Testers geprüft. Dieser verwendet eine kapazitive Methode, um die Variabilität im Gewicht eines Faserstranges zu bestimmen und damit Rückschlüsse auf Unregelmäßigkeiten an der Oberfläche zu ziehen. Anhand der ersten 100 m des Garnes wurde ein Mittelwert des Garngewichtes bestimmt. Die folgenden 1000 m des Garns wurden in 1 cm Stücken vermessen. Die Abweichung vom anfangs gemessenen Mittelwert wurde erfasst. Die Anzahl der Abweichungen (- 50 % für Dünnstellen / + 50 % für Dickstellen / + > 100 % für Nissen) wurde gezählt. Nissen sind Dickstellen, welche kürzer als 1 cm sind und Abweichung des Garngewichtes vom Mittelwert des Garngewichtes von > 100% aufweisen. Der USTER® Tester gibt üblicherweise an, wieviele Nissen mit Abweichungen von > 140 % bzw > 200 % auftreten (siehe Tabelle 3).

## Patentansprüche

1. Verfahren zur Herstellung von Lyocell-Stapelfasern, umfassend die Schritte in folgender Reihenfolge:

   a) Extrudieren von Filamenten aus einer Lösung von Cellulose in einem organischen Lösungsmittel
   b) Ausfällen der Cellulose zur Bildung von endlosen Cellulosefilamenten
   c) Waschen der Cellulosefilamente
   d) In-Kontakt-Bringen der Cellulosefilamente mit einem Vernetzungsmittel
   e) Reaktion der Cellulosefilamente mit dem Vernetzungsmittel in einer Reaktionskammer
   f) Waschen der behandelten Cellulosefilamente
   g) Schneiden der gewaschenen Cellulosefilamente zu Stapelfasern
   h) Bildung eines Faservlieses aus den Stapelfasern und Abpressen des Faservlieses
   i) Avivierung des Faservlieses und Abpressen des Faservlieses.

2. Verfahren gemäß Anspruch 1, **dadurch gekennzeichnet, dass** die Filamente bzw. die Stapelfasern erstmals nach dem Schritt i) getrocknet werden.

3. Verfahren gemäß Anspruch 1 oder 2, **dadurch gekennzeichnet, dass** die Reaktion im Schritt e) unter Energiezufuhr

durchgeführt wird.

4. Verfahren gemäß Anspruch 3, **dadurch gekennzeichnet, dass** die Reaktion im Schritt e) in Anwesenheit von Dampf durchgeführt wird.

5. Verfahren gemäß Anspruch 4, **dadurch gekennzeichnet, dass** der Schritt e) in einer Dampfkammer durchgeführt wird.

6. Verfahren gemäß einem der vorhergehenden Ansprüche, **dadurch gekennzeichnet, dass** die Dauer des Schritts e) 3 bis 30 Minuten, bevorzugt 10 Minuten bis 25 Minuten, besonders bevorzugt 15 bis 20 Minuten beträgt.

7. Verfahren gemäß einem der vorhergehenden Ansprüche, **dadurch gekennzeichnet, dass** das Vernetzungsmittel in einer Menge eingesetzt wird, sodass sich ein Gehalt G an Vernetzungsmittel in mol pro 1 kg Cellulose atro ergibt, welcher folgender Formel genügt:
G x R = 0,10 - 0,45, bevorzugt 0,10 - 0,35, besonders bevorzugt 0,20 - 0,35, wobei R die Anzahl an reaktiven Gruppen im Vernetzungsmittel bedeutet.

8. Verfahren gemäß einem der vorhergehenden Ansprüche, **dadurch gekennzeichnet, dass** als Vernetzungsmittel eine Verbindung der Formel (I)

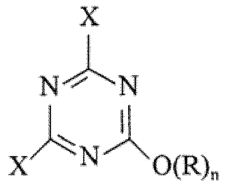

(I),

wobei X Halogen, R=H oder einen ionischen Rest darstellt und n=0 oder 1 ist, bzw. ein Salz dieser Verbindung, bevorzugt das Natriumsalz des 2,4-Dichlor-6-hydroxy-1.3.5-triazins, eingesetzt wird.

9. Verfahren gemäß Anspruch 8, **dadurch gekennzeichnet, dass** das Vernetzungsmittel der Verbindung der Formel (I) in einer Menge von 30-80 g, bevorzugt 45-60 g auf 1 kg Cellulose atro eingesetzt wird.

10. Lyocell-Stapelfaser, erhältlich durch ein Verfahren gemäß Anspruch 9, **gekennzeichnet durch** die Kombination folgender Eigenschaften:

- Die Faser weist einen Titer von 1,2 dtex bis 1,5 dtex, bevorzugt 1,25 dtex bis 1,45 dtex, auf
- Die Faser weist eine permanente Kräuselung auf
- Die Faser weist eine Faserfestigkeit in konditioniertem Zustand von zumindest 36 cN/tex, bevorzugt 38 cN/tex bis 42 cN/tex auf
- Die Faser weist einen Höller-Faktor F1 ≥ 2,1, bevorzugt ≥ 2,4, besonders bevorzugt von 2,5 bis 3,2 auf
- Die Faser weist einen Höller-Faktor F2 ≥ 3,0, bevorzugt ≥ 3,5, besonders bevorzugt von 4,0 bis 5,5 auf.

11. Lyocell-Stapelfaser gemäß Anspruch 10, **gekennzeichnet durch** eine Faserdehnung in konditioniertem Zustand von 10% und mehr, bevorzugt 10% bis 11%.

12. Lyocell-Stapelfaser gemäß Anspruch 10 oder 11, **gekennzeichnet durch** eine Nassscheuerfestigkeit (NSF) von 300 Umdrehungen/dtex oder mehr, bevorzugt 400 Umdrehungen/dtex oder mehr, besonders bevorzugt 450 Umdrehungen/dtex oder mehr.

13. Lyocell-Stapelfaser gemäß einem der Ansprüche 10 bis 12, **dadurch gekennzeichnet, dass** sie einen Gehalt G an Vernetzungsmittel in mol pro 1 kg Cellulose atro aufweist, welcher folgender Formel genügt:
G x R = 0,10 - 0,45, bevorzugt 0,10 - 0,35, besonders bevorzugt 0,20 - 0,35, wobei R die Anzahl an reaktiven Gruppen im Vernetzungsmittel bedeutet.

14. Lyocell-Stapelfaser gemäß Anspruch 13, **dadurch gekennzeichnet, dass** der Gehalt des Vernetzungsmittels der Verbindung der Formel (I) 2,0-3,0 Gew.% bezogen auf Cellulose atro beträgt.

**15.** Faserbündel, enthaltend zumindest 20 kg einer Lyocell-Stapelfaser gemäß einem der Ansprüche 10 bis 14.

**16.** Textiler Artikel, enthaltend eine Lyocell-Stapelfaser gemäß einem der Ansprüche 10 bis 14.

**17.** Textiler Artikel gemäß Anspruch 16 in Form eines Garns.

Fig. 1

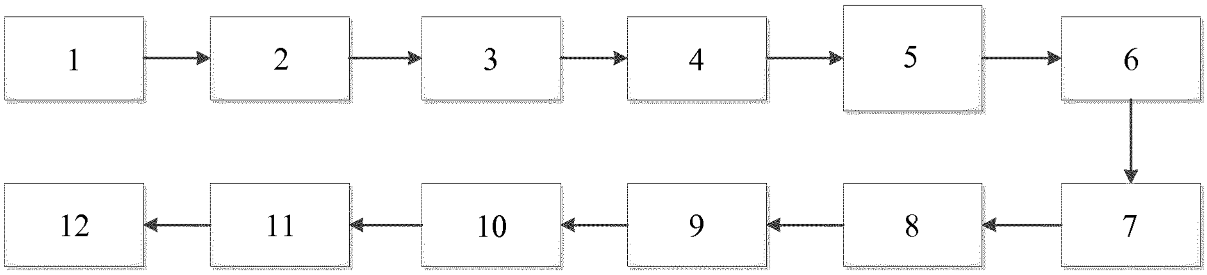


Fig. 2

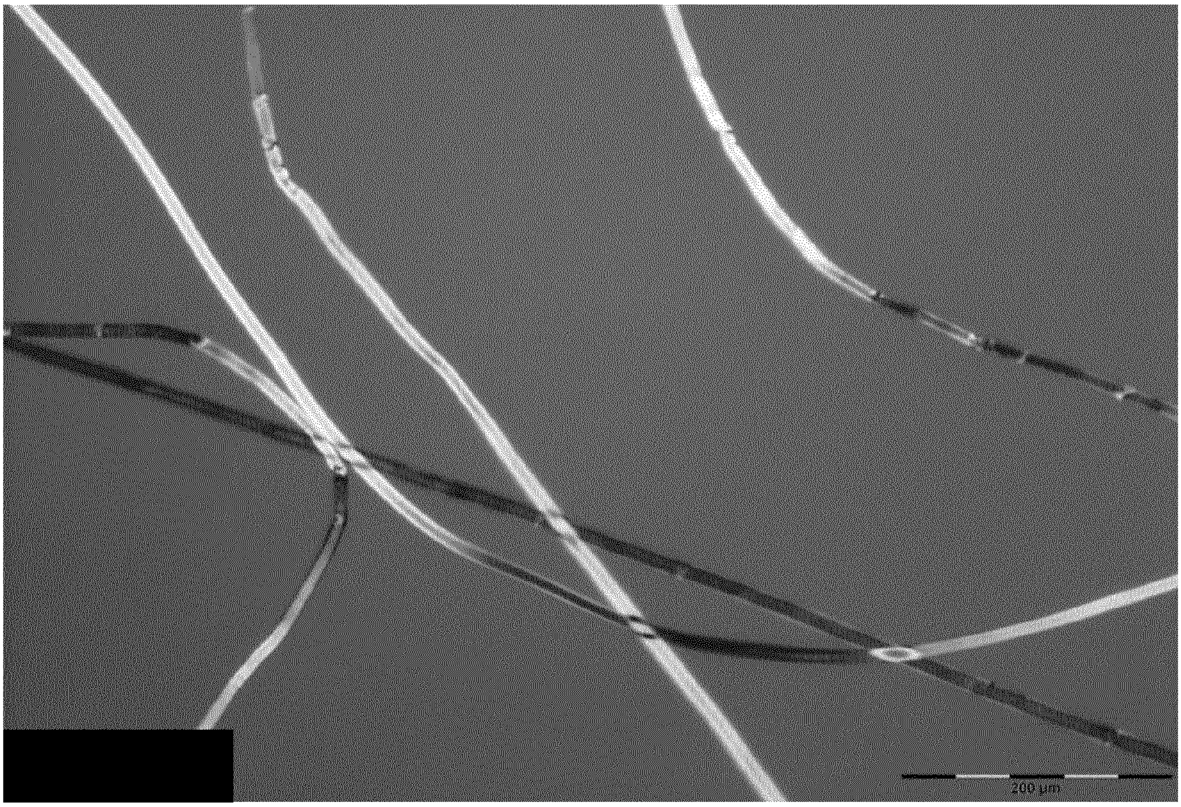

Fig. 3

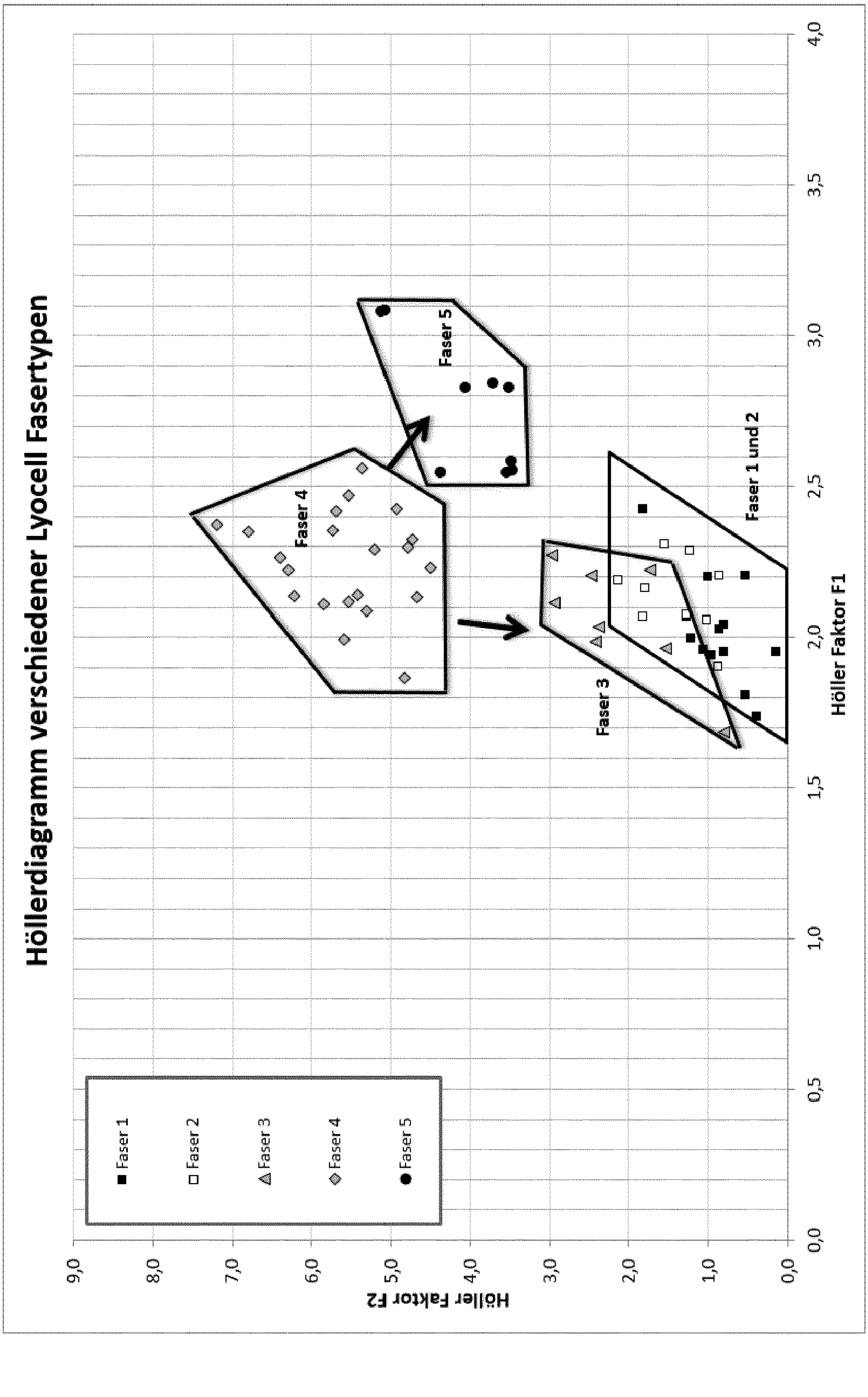
Höllerdiagramm verschiedener Lyocell Fasertypen
Faser 1
Faser 2
Faser 3
Faser 4
Faser 5
Faser 1 und 2
Höller Faktor F1
Höller Faktor F2
0,0
0,5
1,0
1,5
2,0
2,5
3,0
3,5
4,0
9,0
8,0
7,0
6,0
5,0
4,0
3,0
2,0
1,0
0,0

Europäisches Patentamt
European Patent Office
Office européen des brevets

# EUROPÄISCHER RECHERCHENBERICHT

Nummer der Anmeldung
EP 19 18 9737

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 562 739 A (URBEN PETER G [GB]) 8. Oktober 1996 (1996-10-08) * Spalte 1, Zeilen 5-24; Ansprüche 1,3,5; Beispiele 6B, 6C,6D; Tabelle 1 * * Spalte 2, Zeilen 28-36 * ----- | 1,3,6,7, 10-17 | INV. D01F2/00 D01F11/02 D04H1/4258 |
| X<br>A | GB 2 373 784 A (TENCEL LTD [GB]) 2. Oktober 2002 (2002-10-02) * Beispiele 2,4,5 * ----- | 1-9<br>10-17 | |
| X<br>A | WO 2004/007818 A1 (CHEMIEFASER LENZING AG [AT]; REDLINGER SIGRID [AT] ET AL.) 22. Januar 2004 (2004-01-22) * Seite 9, Zeilen 17-32; Ansprüche 1,8; Beispiele 6,5,1 * ----- | 1-9<br>10-17 | |
| A | DE 100 43 297 A1 (THUERINGISCHES INST TEXTIL [DE]) 21. März 2002 (2002-03-21) * Absätze [0007], [0009]; Ansprüche 1,6,7,9 * ----- | 1-17 | |
| | | | RECHERCHIERTE SACHGEBIETE (IPC) |
| | | | D01F D04H |

Der vorliegende Recherchenbericht wurde für alle Patentansprüche erstellt

1

| Recherchenort | Abschlußdatum der Recherche | Prüfer |
|---|---|---|
| Den Haag | 7. Januar 2020 | Malik, Jan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 19 18 9737

In diesem Anhang sind die Mitglieder der Patentfamilien der im obengenannten europäischen Recherchenbericht angeführten Patentdokumente angegeben. Die Angaben über die Familienmitglieder entsprechen dem Stand der Datei des Europäischen Patentamts am Diese Angaben dienen nur zur Unterrichtung und erfolgen ohne Gewähr.

07-01-2020

| Im Recherchenbericht angeführtes Patentdokument | Datum der Veröffentlichung | Mitglied(er) der Patentfamilie | Datum der Veröffentlichung |
|---|---|---|---|
| US 5562739 A | 08-10-1996 | EP 0691426 A2 | 10-01-1996 |
| | | JP H0849167 A | 20-02-1996 |
| | | US 5562739 A | 08-10-1996 |
| GB 2373784 A | 02-10-2002 | KEINE | |
| WO 2004007818 A1 | 22-01-2004 | AT 409760 T | 15-10-2008 |
| | | AT 411769 B | 25-05-2004 |
| | | AU 2003243797 A1 | 02-02-2004 |
| | | BR 0312613 A | 19-04-2005 |
| | | CN 1681978 A | 12-10-2005 |
| | | EP 1537261 A1 | 08-06-2005 |
| | | JP 5372707 B2 | 18-12-2013 |
| | | JP 2005534818 A | 17-11-2005 |
| | | JP 2010059598 A | 18-03-2010 |
| | | KR 20050035244 A | 15-04-2005 |
| | | KR 20110116069 A | 24-10-2011 |
| | | RU 2318084 C2 | 27-02-2008 |
| | | TW I316978 B | 11-11-2009 |
| | | US 2005189675 A1 | 01-09-2005 |
| | | US 2010289177 A1 | 18-11-2010 |
| | | WO 2004007818 A1 | 22-01-2004 |
| | | ZA 200500204 B | 26-07-2006 |
| DE 10043297 A1 | 21-03-2002 | AT 318947 T | 15-03-2006 |
| | | AU 8754201 A | 13-03-2002 |
| | | CN 1449460 A | 15-10-2003 |
| | | DE 10043297 A1 | 21-03-2002 |
| | | EP 1315856 A1 | 04-06-2003 |
| | | WO 0218682 A1 | 07-03-2002 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0553070 A
- US 4246221 A
- WO 9319230 A
- EP 0538977 A
- WO 9749856 A
- WO 9919555 A
- WO 9409191 A
- WO 9528516 A
- WO 9427903 A
- WO 9524520 A
- WO 9828516 A
- WO 9714829 A
- CN 204265902 U
- CN 203960407 U
- CN 203904520 U
- CN 203403200 U
- CN 203402582 U
- CN 204000264 U
- CN 203999953 U
- CN 106757906 A
- CN 108360182 A
- WO 2015101543 A
- EP 2019055441 W
- AT 2009000334 W


### In der Beschreibung aufgeführte Nicht-Patentliteratur


- **HÖLLER ; PUCHEGGER.** *Melliand Textilberichte,* 1984, vol. 65, 573-574
- Prüfverfahren Viskose, Modal, Lyocell und Acetat Stapelfasern und Seile. 2004
- *Lenzinger Berichte,* 2013, vol. 91, 07-12
- Zur Fasernassscheuerung von Viskosefasern. Faserforschung and Textiltechnik. 1968, vol. 19, 447-452